# EUROPÄISCHE PATENTSCHRIFT

(11) **EP 3 646 448 B1**
(45) Veröffentlichungstag und Bekanntmachung des Hinweises auf die Patenterteilung: **19.01.2022**
(21) Anmeldenummer: 18735541.7
(22) Anmeldetag: 26.06.2018
(51) Int. Cl.: H02K 7/14, H02K 11/01, H02K 5/22, H02K 21/16, H02K 21/22, H02K 1/27, H02K 11/33

(54) **ELEKTROMOTORISCHER ANTRIEB FÜR EIN KRAFTFAHRZEUG**
ELECTRIC DRIVE FOR A MOTOR VEHICLE
ENTRAÎNEMENT À MOTEUR ÉLECTRIQUE POUR UN VÉHICULE À MOTEUR

(30) Priorität: 26.06.2017 DE 102017210734
(43) Veröffentlichungstag der Anmeldung: 06.05.2020
(73) Patentinhaber: Brose Fahrzeugteile SE & Co. Kommanditgesellschaft, Würzburg, 97076 Würzburg (DE)
(72) Erfinder: LUDWIG, Kevin, 20537 Hamburg (DE); LABAT, Sebastien, 97523 Schwanfeld (DE); DUPPE, Carsten, 97273 Kürnach (DE); HERMANN, Eugen, 96269 Großheirath (DE)
(74) Vertreter: FDST Patentanwälte
(86) Internationale Anmeldenummer: PCT/EP2018/067064
(87) Internationale Veröffentlichungsnummer: WO 2019/002266

(56) Entgegenhaltungen:
- EP-A1- 2 999 097
- EP-A1- 3 125 413
- EP-A2- 1 050 682
- DE-A1-102007 025 232
- DE-A1-102010 034 563
- FR-A1- 3 036 889
- US-A- 4 203 704
- US-A1- 2003 193 264

## Beschreibung

Die Erfindung betrifft einen elektromotorischen Antrieb für ein Kraftfahrzeug, insbesondere einen Lüfterantrieb, mit einem Elektromotor mit einem um eine Drehachse drehbar relativ zu einem feststehenden Stator drehbaren Rotor. Die Erfindung betrifft weiterhin eine Lüftereinrichtung für ein Kraftfahrzeug mit einem derartigen Antrieb.

Kraftfahrzeuge mit einem Verbrennungsmotor weisen im Betrieb eine beachtliche Wärmeentwicklung auf. Zum Halten der Betriebstemperatur beziehungsweise innerhalb einer Klimaanlage wird typischerweise ein Kühlmittel eingesetzt, welches wiederum gekühlt werden muss. Dies geschieht üblicherweise dadurch, dass Kühlluft über Kühlrippen streicht, die im Wärmeausgleich zu dem Kühlmittel stehen. Da insbesondere bei geringen Fahrgeschwindigkeiten der Fahrtwind zur Kühlung normalerweise nicht ausreicht, ist es zum Beispiel möglich, an dem die Kühlrippen umfassenden Kühler eine Kühlerzarge mit einem elektrischen (elektromotorischen) Antrieb zu befestigen, welcher einen zusätzlichen Luftstrom erzeugt, der vom Zargenkörper geführt wird. Zu diesem Zwecke weist der (Lüfter-)Antrieb einen Elektromotor auf, welcher antriebstechnisch mit einem Antriebsteil, insbesondere mit einem den Luftstrom erzeugenden Lüfterrad, gekoppelt ist. Herkömmlicherweise weist der Zargenkörper eine im Wesentlichen runde Aussparung auf, innerhalb welcher der Lüfterantrieb angeordnet ist. Die Ebene, in der sich das Lüfterrad befindet, ist dabei im Wesentlichen parallel zu der Ebene der Kühlrippen. Der mit dem Lüfterrad antriebstechnisch gekoppelte Elektromotor ist beispielsweise stirnseitig mittels Schrauben oder Nieten an einer starren Halterung fixiert, wobei die Halterung mittels radial verlaufender Streben im Zentrum der Aussparung gehalten wird.

Zum Beispiel werden hierfür bürstenlose Elektromotoren eingesetzt, bei denen ein gegenüber einem Stator drehbar gelagerter Rotor durch ein magnetisches Drehfeld angetrieben wird. Hierbei werden Phasenwicklungen des Rotors (Drehfeldwicklung) mit einem entsprechenden elektrischen Dreh- oder Motorstrom beaufschlagt, welcher mittels eines Controllers als Teil einer (Motor-)Elektronik gesteuert und geregelt wird.

Im elektromotorischen Betrieb werden aufgrund von Umschaltvorgängen Wechselströme in den Leitungen der Motorelektronik sowie in der Drehfeldwicklung erzeugt. Diese Wechselströme erzeugen entsprechende elektromagnetische Störfelder, welche hinsichtlich einer Einhaltung von EMV-Richtlinien (elektromagnetische Verträglichkeit) als kritisch zu bewerten sind.

Aus der DE 10 2010 034 563 A1 ist ein elektronisch kommutierter Gleichstrommotor für eine Flüssigkeitspumpe bekannt, bei welchem der Stator, von einer flexiblen Folie, welche als Metallfolie oder als metallisierte Kunststofffolie ausgebildet ist, umgeben ist und zumindest ein großer Teil der Folie innerhalb des Motorgehäuses radial um die Statorwicklungen herum angeordnet ist.

In der DE 10 2007 025 232 A1 ist ein Rotor einer elektrischen Maschine offenbart, welcher einen Rotorkörper und eine dem Rotorkörper zugeordnete Impulsgeberstruktur zur Erfassung der Drehlage und/oder der Drehzahl des Rotors aufweist. An dem Rotorkörper wird die Impulsgeberstruktur bei der Herstellung des Rotorkörpers mit ausgebildet.

Die EP 2 999 097 A1 beschreibt eine elektrische Drehvorrichtung für eine Kraftmaschine, die durch einen Bremsmechanismus gebremst werden kann. Die Drehvorrichtung umfasst eine Abdeckung, die eine mit einem Boden versehene zylindrische Form hat und ein Joch der Vorrichtung abdeckt.

Der Erfindung liegt die Aufgabe zugrunde, einen besonders geeigneten elektromotorischen Antrieb für ein Kraftfahrzeug anzugeben. Insbesondere soll der Antrieb hinsichtlich der Abstrahlung elektromagnetischer Störfelder im elektromotorischen Betrieb verbessert werden. Der Erfindung liegt weiterhin die Aufgabe zugrunde, einen für einen solchen Antrieb geeigneten Elektromotor sowie eine mit einem derartigen Antrieb versehene Lüftereinrichtung für ein Kraftfahrzeug anzugeben. Hinsichtlich des elektromotorischen Antriebs wird die Aufgabe mit den Merkmalen des Anspruchs 1 und hinsichtlich der Lüftereinrichtung mit den Merkmalen des Anspruchs 4 erfindungsgemäß gelöst. Vorteilhafte Ausgestaltungen und Weiterbildungen sind Gegenstand der jeweiligen Unteransprüche.

Der erfindungsgemäße elektromotorische Antrieb ist für den Einsatz in einem Kraftfahrzeug und dort insbesondere als ein Lüfterantrieb, beispielsweise als Axiallüfter, vorgesehen und eingerichtet. Hierzu weist der Antrieb einen vorzugsweise bürstenlosen Elektromotor mit einem an einer axial gerichteten Dreh- oder Motorachse gegenüber einem feststehenden Stator drehbar gelagerten Rotor auf. Der Rotor ist vorzugsweise drehfest mit einem Antriebsteil, insbesondere mit einem Lüfterrad, gekoppelt. Der Elektromotor weist weiterhin ein beispielsweise topfförmiges Motorgehäuse auf, in welches der Stator und der Rotor eingesetzt sind. Erfindungsgemäß weist der Elektromotor mindestens ein elektrisch leitfähiges Abdeckteil zur Beeinflussung und/oder Abschirmung von im elektromotorischen Betrieb erzeugten elektromagnetischen Störfeldern auf. Mit anderen Worten werden die im Betrieb erzeugten elektromagnetischen Störfelder mittels des oder jedes Abdeckteils abgefangen, gedämpft, umgeleitet oder zumindest geschwächt. Dadurch wird die elektromagnetische Verträglichkeit (EMV) des elektromotorischen Antriebs verbessert. Dies ist insbesondere bei einem als Außenläufer ausgeführten Elektromotor bei Anwendungen als Lüfterantrieb vorteilhaft.

Durch das oder jedes erfindungsgemäße Abdeckteil ist eine kostengünstige, robuste mechanische Lösung zur Einhaltung von EMV-Spezifikationen, insbesondere für Lüfterantriebe, realisiert, welche besonders montagefreundlich ist. Des Weiteren ist der Antrieb durch die Ausgestaltung und Positionierung des oder jedes Abdeckteils flexibel an unterschiedliche Anwendungen anpassbar.

In einer vorteilhaften Ausführung ist das Abdeckteil an dem Motorgehäuse, insbesondere berührend, angelagert. Dadurch ist ein besonders vorteilhafter elektromotorischer Antrieb gebildet.

Das Abdeckteil weist einen manschettenartigen Mantel auf, welcher umfangsseitig auf ein äußeres Motorteil aufgesetzt ist, das ein inneres Motorteil aufnimmt. Unter einem Motorteil sind hierbei der Stator und der Rotor des Elektromotors zu verstehen. In der erfindungsgemäßen Ausführung des Elektromotors als Außenläufer (Außenläufer- Elektromotor) bildet der Stator das innere Motorteil, welches von dem Rotor als äußeres Motorteil umgeben oder eingefasst ist. Hierbei wird das manschettenartige Abdeckteil auf den Außenumfang des Rotors aufgesetzt. Bei einer nicht zur Erfindung gehörenden Ausführung des Elektromotors als Innenläufer bildet der Rotor das innere Motorteil, welches in den Stator als äußeres Motorteil eingesetzt ist. Entsprechend wird das manschettenartige Abdeckteil hierbei auf den Außenumfang des Stators aufgesetzt. Das Abdeckteil beziehungsweise der Mantel umgreift somit den Außenumfang des Rotors beziehungsweise des Stators. Durch den Mantel ist eine zuverlässige EMV-Schirmung im elektromotorischen Betrieb gewährleistet. Der Mantel ist beispielsweise als ein Tiefziehteil oder als ein gerolltes Teil hergestellt.

Der Mantel weist an seiner Innenwandung, also der im Montagezustand dem Rotor zugewandten Mantelfläche, radial nach innen ragende Sicken für einen radialen Toleranzausgleich zum jeweiligen Motorteil auf. Dadurch wird die Montage wesentlich vereinfacht. Bei einem nicht erfindungsgemäßen Innenläufer-Elektromotor (Innenläufer) ist es weiterhin denkbar, dass das auf den Stator aufgesetzte manschettenartige Abdeckteil elektrisch leitfähig mit dem Joch eines Statorblechpakets gekoppelt ist. Dadurch ist eine zusätzliche Massenanbindung des Abdeckteils beispielsweise an einen Motorträger ermöglicht, wodurch ein besonders hohes Schirmungspotential realisierbar ist.

In einer geeigneten Ausführung weist das Abdeckteil bei einem Außenläufer, insbesondere der Mantel, einen kragenseitigen Halterand auf, welcher radial nach innen gerichtet ist. Das Abdeckteil beziehungsweise der Mantel hintergreift somit den Rotor mittels des radial nach innen gebogenen Halterands. Geeigneterweise wird hierbei zunächst der Rotor in das Abdeckteil eingesetzt, woraufhin der stirnseitige Bereich des Mantels zur Bildung des Halterands radial nach innen gebogen wird. Mit anderen Worten wird der Rotor somit von dem Halterand formschlüssig hintergriffen, sodass das Abdeckteil den Rotor betriebssicher umfasst. Somit ist der Rotor vor einem ungewünschten Herausgleiten aus dem Abdeckteil gesichert. Der Mantel weist erfindungsgemäß eine Anzahl von radial nach innen gebogenen Haltelaschen auf, mittels welchen der Mantel kragenseitig an einer Stirnseite des Elektromotors befestigbar ist. Mit anderen Worten ist der Halterand segmentiert als eine Anzahl von Haltelaschen ausgebildet, welche im Montagezustand vorzugsweise an dem Rückschlusstopf schraubbefestigt sind.

In einer nicht erfindungsgemäßen Weiterbildung ist das Abdeckteil im Wesentlichen topfartig ausgebildet. Das Abdeckteil weist hierbei einen stirnseitigen Topfboden sowie den umfangsseitigen (Topf-)Mantel auf, wobei der Rotor in das Abdeckteil teilweise oder vollständig eingesetzt ist. Geeigneterweise ist der Elektromotor hierbei als ein Außenläufer ausgestaltet. Der Topfboden und der Topfmantel sind miteinander gefügt, beispielsweise wird der Topfboden zumindest abschnittsweise von dem Halterand des Mantels übergriffen. In einer geeigneten Weiterbildungsform sind der Topfboden und der Topfmantel insbesondere einstückig, also einteilig oder monolithisch miteinander, ausgebildet. Dadurch wird die Abschirmung der im elektromotorischen Betrieb erzeugten Störfelder verbessert.

In einer nicht erfindungsgemäßen Weiterbildungsform ist somit ein topfartiges oder topfförmiges Abdeckteil vorgesehen, in welches der Rotor eingesetzt ist. Das Abdeckteil ist vorzugsweise drehfest mit dem Rotor gekoppelt. Dies bedeutet, dass das Abdeckteil bei einer Rotation des Rotors mit diesem rotiert. Mit anderen Worten ist das Abdeckteil in dieser Weiterbildungsform als eine Rotorabdeckung beziehungsweise als ein EMV-Topf ausgestaltet. Die Rotorabdeckung weist hinsichtlich der EMV ein besonders hohes Schirmungspotential auf, wodurch eine zuverlässige Abschirmung der im elektromotorischen Betrieb erzeugten Störfelder der Drehfeldwicklung des Rotors ermöglicht ist. Der Topfboden ist insbesondere zum Antriebsteil hin orientiert auf den Rotor aufgesetzt. Dadurch ist eine zuverlässige EMV-Abschirmung im elektromotorischen Betrieb des Antriebs realisiert.

In einer nicht erfindungsgemäßen Weiterbildungsform weist der Topfboden einen zentralen Kreisringbereich auf, von welchem aus sich radial gerichtete Streben (Radialstreben) zu dem Topfboden erstrecken. Durch die zwischen den Streben gebildeten Aussparungen ist im Betrieb ein Luftstrom zum Rotor und somit eine zuverlässige und konstruktiv einfache Kühlung der Drehfeldwicklungen des Rotors ermöglicht. Zusätzlich oder alternativ weist der Kreisringbereich weitere Aussparungen zur Verbesserung der Lüftung auf.

Gemäß einer weiteren vorteilhaften Ausführung ist ein weiteres, kreisringförmiges Abdeckteil vorgesehen, welches stirnseitig die Drehfeldwicklung des Stators teilweise oder vollständig abdeckt. Dadurch wird insbesondere die stirnseitige Abschirmung und/oder Beeinflussung der Störfelder weiter verbessert.

In einer nicht erfindungsgemäßen Weiterbildung sind im Bereich der zentralen Kreisringöffnung des Abdeckteils radial nach innen gerichtete und axial abgewinkelte - also in Axialrichtung umgebogene - Winkellaschen angeformt. In einer bevorzugten Ausgestaltung sind die Winkellaschen hierbei insbesondere an dem Stator befestigt. Mit anderen Worten ist das Abdeckteil in dieser Ausführung gehäusefest oder statisch als Statorschirmung befestigt. Dadurch wirkt sich das Abdeckteil nicht nachteilig auf eine Wuchtgüte des Elektromotors aus. Geeigneterweise sind die Winkellaschen hierbei an Befestigungsstellen des Stators befestigt. Dies bedeutet, dass vorhandene Befestigungsmöglichkeiten, mittels welchen der Stator im Motorgehäuse befestigt ist, zur Befestigung der Winkellaschen genutzt werden. Somit wird der vorhandene Bauraum im Motorgehäuse nicht nachteilig beeinflusst.

In einer geeigneten Ausführung ist das oder jedes Abdeckteil in das beispielsweise poltopfartige oder poltopfförmige Motorgehäuse des Elektromotors eingesetzt. Dadurch wird die EMV des elektromotorischen Antriebs weiter verbessert.

Eine geeignete Ausführung sieht ein weiteres, scheibenförmiges Abdeckteil vor, welches auf eine Nabe des Antriebsteils aufgesetzt ist. Mit anderen Worten wird das Abdeckteil beispielsweise auf die Flügelradnabe eines Lüfterrads aufgesetzt und an dieser befestigt. Dies bedeutet, dass das als Nabenabdeckung ausgestaltete Abdeckteil vorzugsweise mit dem angetriebenen Antriebsteil rotiert. Dadurch wird die Abschirmung und/oder Beeinflussung der im Betrieb erzeugten elektromagnetischen Störfelder weiter verbessert. Des Weiteren weist das Abdeckteil in dieser Ausgestaltung eine besonders einfache Bauteilgeometrie auf. Dies überträgt sich in der Folge vorteilhaft auf die Herstellungs- und Montagekosten.

Ein Elektromotor ist für den vorstehend beschriebenen Antrieb geeignet und eingerichtet. Insbesondere weist der Elektromotor ein oder mehrere Abdeckteile zur Verbesserung der EMV-Eigenschaften auf.

In einer bevorzugten Anwendung ist der vorstehend beschriebene elektromotorische Antrieb Teil einer Lüftereinrichtung eines Kraftfahrzeugs. Der Antrieb weist hierbei ein Lüfterrad als Antriebsteil auf, wobei das weitere, scheibenförmige Abdeckteil auf die Nabe des Lüfterrades aufgesetzt ist.

Nachfolgend sind Ausführungsbeispiele der Erfindung anhand einer Zeichnung näher erläutert. Darin zeigen:
- Fig. 1: in Perspektive ausschnittsweise eine Kühlerzarge mit einem Lüfter mit einem elektromotorischen Antrieb,
- Fig. 2: in Schnittdarstellung den Antrieb mit einem Elektromotor umfassend einen Stator und einen Rotor sowie einer auf den Rotor aufgesetzten topfartigen Rotorabdeckung,
- Fig. 3: in Perspektive die Rotorabdeckung,
- Fig. 4: in Perspektive einen manschettenartigen Rotormantel in einer erfindungsgemäßen Ausführungsform mit radial nach innen ragenden Haltelaschen,
- Fig. 5: in Perspektive den Elektromotor mit daran befestigten Rotormantel,
- Fig. 6: in Perspektive den Rotor mit einem Mantel mit einem kragenseitigen Halterand in einer ersten Ausführungsform,
- Fig. 7: in Schnittdarstellung ausschnittsweise den Halterand des Mantels in der ersten Ausführungsform,
- Fig. 8: in Perspektive den Rotor mit einem Mantel mit einem kragenseitigen Halterand in einer zweiten Ausführungsform,
- Fig. 9: in Schnittdarstellung ausschnittsweise den Halterand der Rotorabdeckung in der zweiten Ausführungsform,
- Fig. 10: in Perspektive eine scheibenartige Nabenabdeckung,
- Fig. 11: in Schnittdarstellung den elektromotorischen Antrieb mit der Nabenabdeckung,
- Fig. 12: in Perspektive eine Statorabdeckung,
- Fig. 13: in Perspektive die Statorabdeckung in einem Montagezustand am Elektromotor,
- Fig. 14: in Perspektive einen Stator eines Innenläufermotors mit einem außenumfangseitig angeordneten manschettenartigen Statormantel,
- Fig. 15: in Perspektive den Statormantel und den Stator,
- Fig. 16: ausschnittsweise den Statormantel, und
- Fig. 17: ausschnittsweise eine Fügestelle des Statormantels.

Einander entsprechende Teile und Größen sind in allen Figuren stets mit den gleichen Bezugszeichen versehen.

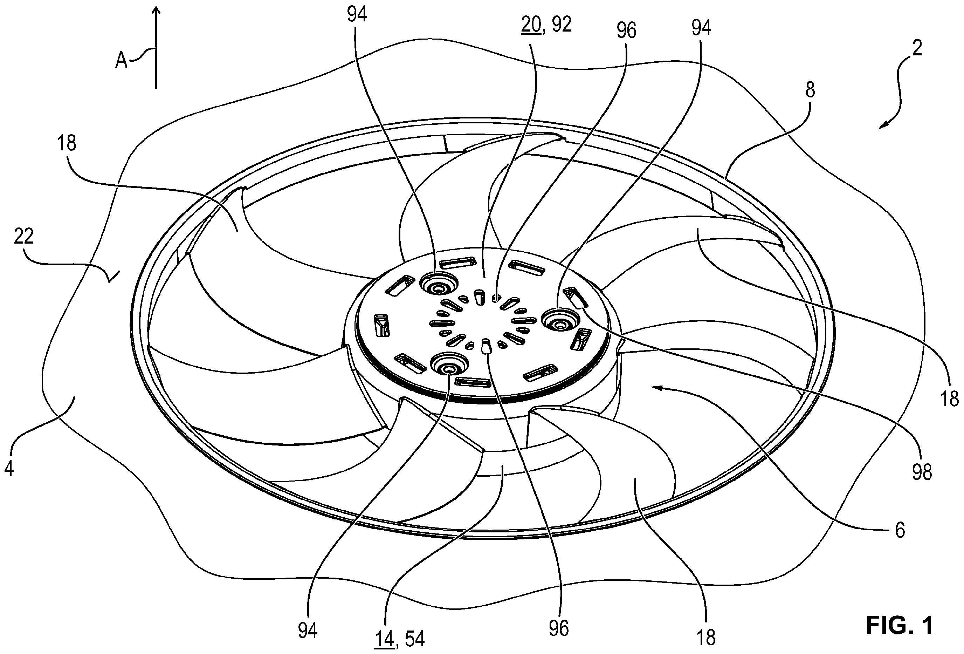

Fig. 1 zeigt ausschnittsweise perspektivisch eine Kühlerzarge 2 mit einem Zargenkörper 4 und mit einer ausschnittsweise dargestellten Lüftereinrichtung (Lüfter) 6 eines nicht näher dargestellten Kraftfahrzeugs. Der Zargenkörper 4 weist eine Aussparung 8 auf, innerhalb welcher der Lüfter 6 angeordnet ist.

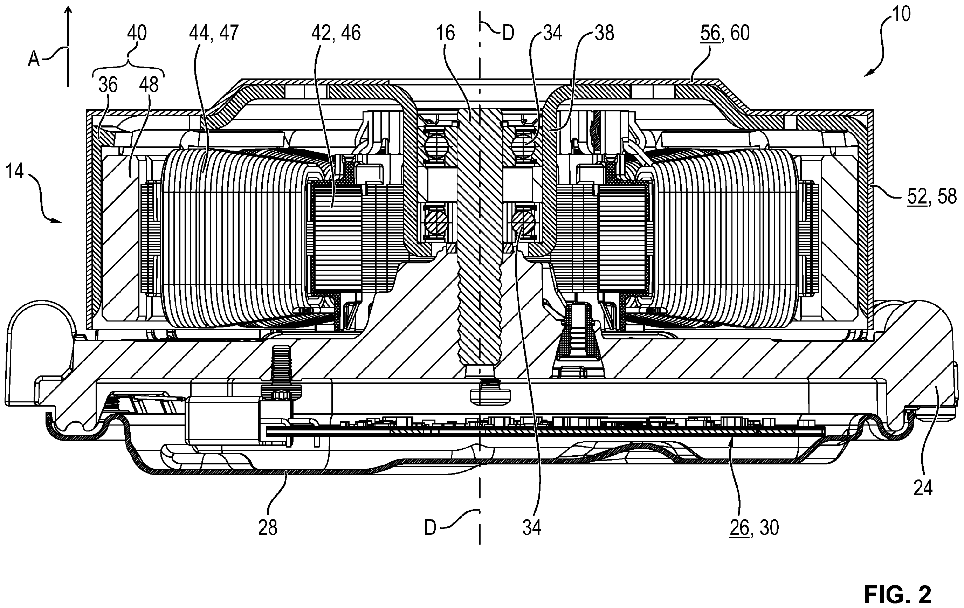

Der als Axiallüfter ausgestaltete Lüfter 6 umfasst einen elektromotorischen (Lüfter)Antrieb 10 (Fig. 2) mit einem als Lüfterrad ausgebildeten Antriebsteil 12 und einen hiermit antriebstechnisch gekoppelten Elektro- oder Lüftermotor 14. Der Elektromotor 14 umfasst eine Motorachse 16 welche sich entlang einer Axialrichtung A des im Wesentlichen zylindrischen Elektromotors 14 erstreckt und im Lot auf das Zentrum des Antriebsteils 12 trifft und somit dessen Drehachse D bildet.

Das Antriebsteil beziehungsweise Lüfterrad 12 umfasst in dem dargestellten Ausführungsbeispiel der Fig.1 sieben (Lüfter-)Flügel 18, welche lediglich beispielhaft mit Bezugszeichen versehen sind. Die Flügel 18 sind hierbei radial gerichtet an einer zentralen (Flügelrad-)Nabe 20 angeformt. Das Lüfterrad 12, das bedeutet insbesondere die Nabe 20 und die Flügel 18 sind beispielsweise einstückig beziehungsweise monolithisch oder einteilig aus einem Kunststoffmaterial, wie z. B. Polyamid (PA), gefertigt. Die Flügel 18 sind derart ausgestaltet, dass durch eine Rotationsbewegung des Lüfterrads 12 um seine Drehachse D ein Luftstrom durch die Aussparung 8 erzeugt wird. Die Aussparung 8 ist dabei in etwa zylinderförmig, wobei das Lüfterrad 12 im Montagezustand mit einer Oberseite 22 des Zargenkörpers 4 fluchtet.

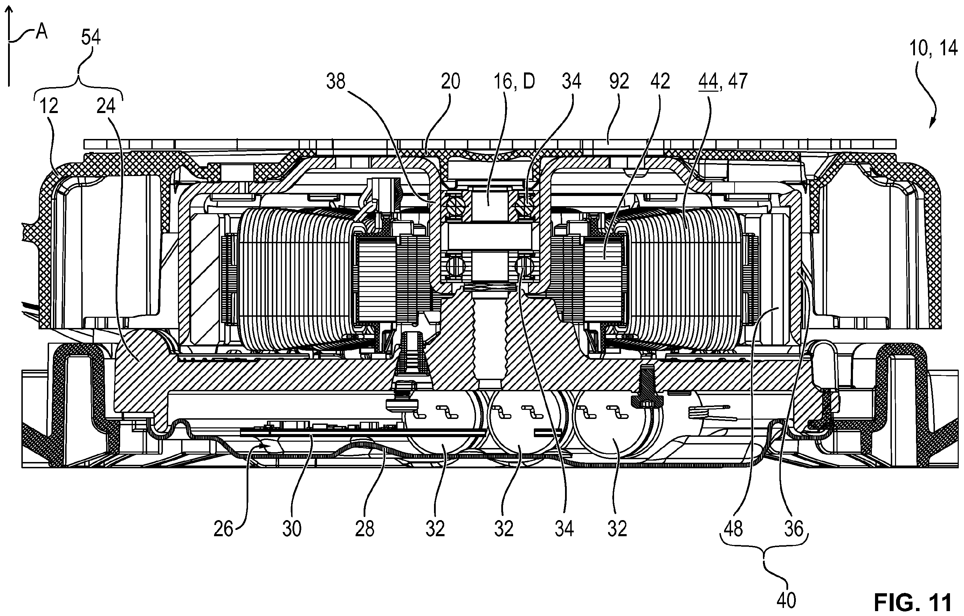

In der Fig. 2 ist der Antrieb 10 anhand einer Schnittdarstellung dargestellt. Der Antrieb 10 umfasst einen den Elektromotor 14 haltenden Motorträger 24 mit einem eine Motorelektronik 26 aufnehmenden Elektronikgehäuse 28. Die Motorelektronik 26 weist beispielsweise eine Wechselrichterschaltung 30 mit mindestens einem Kondensator 32 (Fig. 11) auf.

Zwei beispielsweise als Kugellager ausgestalteter Wälzlager 34 dienen zur um die Drehachse D rotierbaren Lagerung eines Rückschlusstopfs (Rotorgehäuse) 36 an der Motorachse 16. Der Rückschlusstopf 36 weist eine tiefgezogene Lageraufnahme 38 auf, in welcher die Wälzlager 24 axial zueinander beabstandet angeordnet sind.

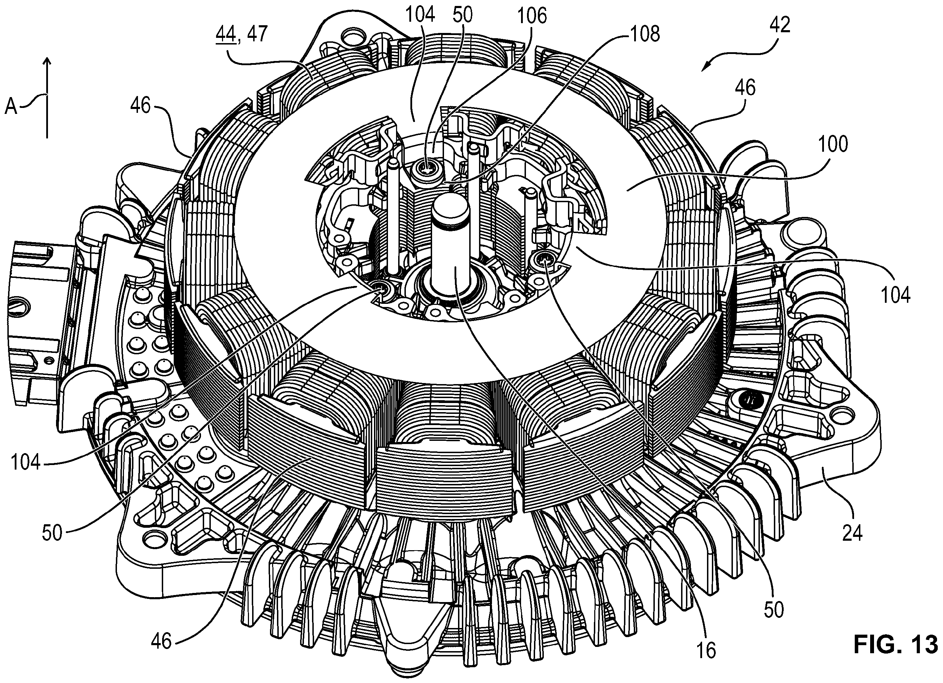

Der Antrieb 10 umfasst weiterhin einen Rotor 40, welcher drehbar an der Motorachse 16 gelagert ist. Der Elektromotor 14 ist als ein bürstenloser Gleichstrommotor mit einem zentralen Stator 42 ausgeführt. Der Elektromotor 14 ist in diesem Beispiel insbesondere als ein Außenläufer ausgeführt, wobei eine mittels der Wechselrichterschaltung 30 bestrombare Drehfeldwicklung 44 auf eine Anzahl an radial gerichteten Statorzähnen 46 (Fig. 13) eines Blechpakets des Stators 42 aufgebracht ist. Die Drehfeldwicklung 44 ist beispielsweise in Form von Einzelspulen auf die einzelnen Statorzähne 46 aufgebracht. Der Rotor 40 ist hierbei mit einer Anzahl von Permanentmagneten 48 bestückt, welche am Innenumfang des Rückschlusstopfs 36 angeordnet sind.

Der Stator 42 ist hierbei gehäusefest mittels axialer Befestigungsschrauben 50 (Fig. 13) an dem Motorträger 24 befestigt. Der Rotor 40 ist im Wesentlichen durch das Rückschlusstopf 36 und die daran innenumfangsseitig angeordneten Permanentmagnete 48 gebildet.

In dem in Fig. 2 dargestellten, zur Erfindung nicht gehörenden Beispiel ist auf das Rückschlusstopf 36 eine topfartige Rotorabdeckung als Abdeckteil 52 aufgesetzt. Das Abdeckteil 52 ist hierbei fest mit dem Rotor 40 beziehungsweise dem Rückschlusstopf 36 gekoppelt, sodass es im elektromotorischen Betrieb rotierend mitgeführt wird. Die Rotorabdeckung 52 ist im Montagezustand beispielsweise innerhalb eines in Fig. 1 lediglich schematisch angedeuteten Motorgehäuses 54 des Elektromotors 14 aufgenommen.

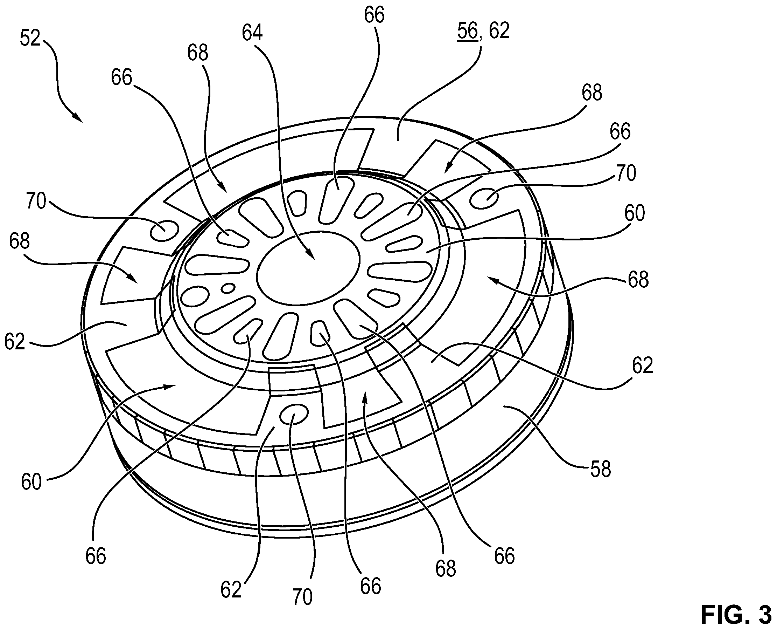

Die in der Fig. 3 einzeln dargestellte Rotorabdeckung 52 ist aus einem elektrisch leitfähigen Material, insbesondere einem Metallmaterial, hergestellt. Die Rotorabdeckung 52 umfasst einen stirnseitigen Topfboden 56 sowie einen umfangsseitigen (Topf-)Mantel 58.

Der Topfboden 56 weist hierbei einen axial überstehenden Kreisringbereich 60 auf, an welchen umfangsseitig sechs radial gerichtete Streben (Radialstreben) 62 jeweils paarweise zum Topfmantel 58 angeformt sind. Die Radialstreben 62 sind in der Fig. 3 lediglich beispielhaft mit Bezugszeichen versehen.

Der Kreisringbereich 60 weist eine zentrale Kreisringöffnung 64 sowie eine Anzahl von diese umgebende Lüftungsöffnungen 64 auf, welche lediglich beispielhaft mit Bezugszeichen versehenen sind. Die Lüftungsöffnungen 64 sind als radial gerichtete Aussparungen oder Langlöcher in den Topfboden 56 beziehungsweise in den Kreisringbereich 60 eingebracht. Des Weiteren sind mittels der zwischen den Radialstreben 62 freigestellten Aussparungen weitere Lüftungsöffnungen 68 zur Kühlung der Drehfeldwicklung 44 und der Motorelektronik 26 vorgesehen.

In drei der Radialstreben 62 sind Befestigungslöcher 70 eingebracht, mittels welchen der Topfboden 56, und somit die topfartige oder topfförmige Rotorabdeckung 52, mechanisch fest an dem Rückschlusstopf 36 beziehungsweise dem Rotor 40 befestigbar ist.

Durch die Rotorabdeckung 52 ist eine besonders effektive Abschirmung der im elektromotorischen Betrieb erzeugten Störfelder des Rotors 40 realisiert, wodurch der Antrieb 10 hinsichtlich seiner elektromagnetischen Verträglichkeit (EMV) verbessert ist.

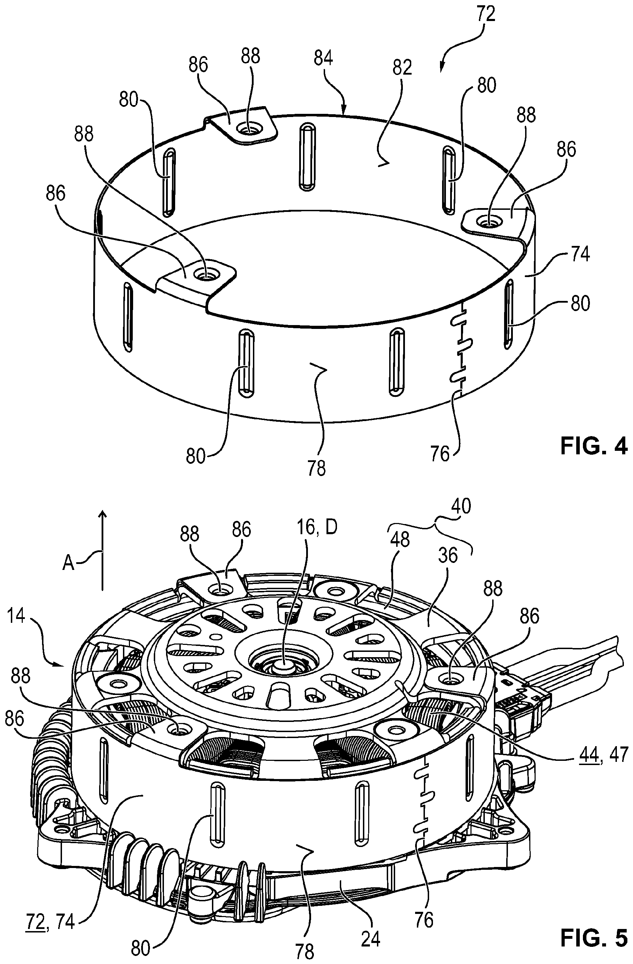

In den Figuren 4 und 5 ist ein erfindungsgemäßes, manschettenartiges oder manschettenförmiges Abdeckteil 72 dargestellt. Das nachfolgend auch als Rotormanschette bezeichnete Abdeckteil 72 weist einen (Manschetten-, Rotor-)Mantel 74 auf, welcher im Montagezustand (Fig. 5) auf den Außenumfang des Rotors 40 beziehungsweise des Rückschlusstopfs 36 aufgesetzt ist. Der Mantel 74 ist aus einem gerollten oder gebogenen streifenförmigen Blechteil geformt, wobei die gegenüberliegenden Stirnseiten des Blechteils zur Bildung des kreisringförmigen Mantels 74 an einer Nahtstelle 76 miteinander gefügt sind.

In die dem Rotor 40 abgewandten Mantelaußenfläche 78 des Mantels 74 sind neun umfangsseitig verteilte Sicken 80 eingebracht, welche an der dem Rotor 40 zugewandten Mantelinnenfläche 82 radial in die Öffnung der Rotormanschette 72 hineinragen. Die Sicken 80 dienen einem Ausgleich des Radialspiels beziehungsweise zum radialen Toleranzausgleich zwischen der Rotormanschette 72 und dem Außenumfang des Rotors 40. Die Sicken 80 sind in den Figuren lediglich beispielhaft mit Bezugszeichen versehen.

Der Mantel 74 der Rotormanschette 72 weist an einem oberen Kragen 84, das bedeutet im Montagezustand dem Antriebsteil 12 zugewandten Ende, drei umfangsseitig verteilte Haltelaschen 86 auf, welche radial nach innen gebogen sind. Jede Haltelasche 86 ist mit einer Befestigungsöffnung 88 versehen.

Die Fig. 5 zeigt die Rotormanschette 72 in einem montierten Zustand an dem Rotor 40. Die Haltelaschen 86 sind hierbei fluchtend zu entsprechenden Speichen oder Streben der Rotor- beziehungsweise Rückschlusstopfstirnseite angeordnet, sodass die Rotormanschette 72 an der Stirnseite drehfest befestigbar ist.

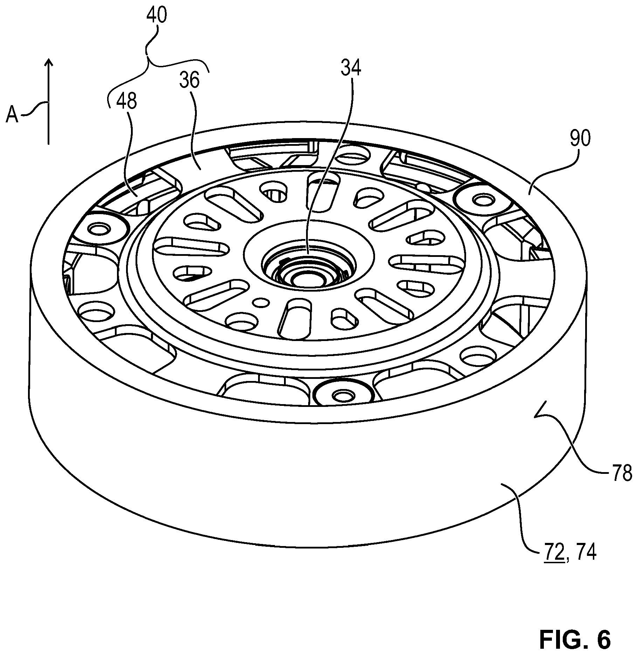

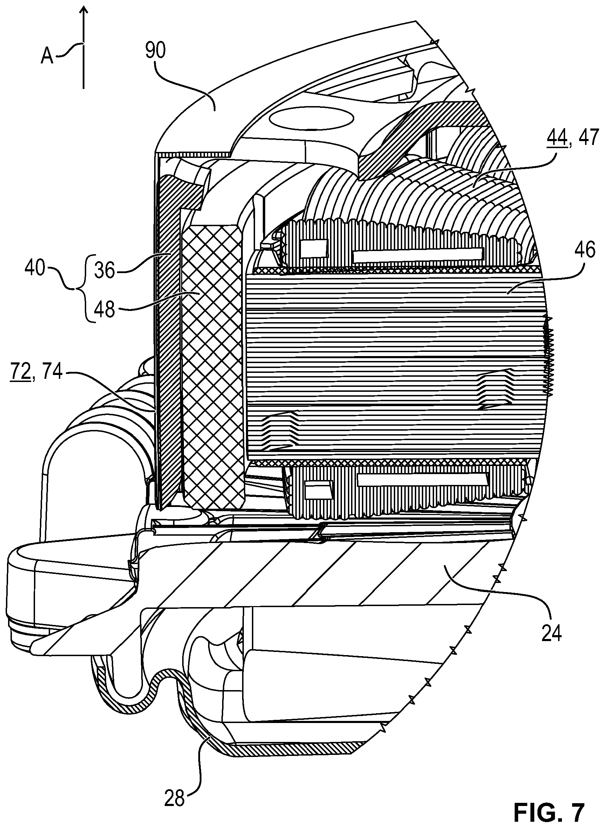

Anhand der Fig. 6 und Fig. 7 ist nachfolgend ausschnittsweise und schematisch eine erste, zur Erfindung nicht gehörende Ausführungsform der Rotormanschette 72 erläutert. In diesem Beispiel weist die Rotormanschette 72 keine Haltelaschen 86 sondern einen kragenseitigen Halterand 90 auf, welcher radial nach innen gebogen ist. Wie insbesondere in der Schnittdarstellung der Fig. 7 ersichtlich hintergreift der Halterand 90 hierbei umfangsseitig die Stirnseite des Rotors 40 beziehungsweise des Rückschlusstopfs 36. Der Halterand 90 ist in dieser Ausführung insbesondere antriebsteilseitig angeformt.

In einer alternativen Ausführungsform der Rotorabdeckung 52 ist es beispielsweise denkbar, dass der (Topf-)Mantel 54 einen entsprechenden Halterand 90 aufweist, mit welchem der Topfboden 56 hintergriffen wird.

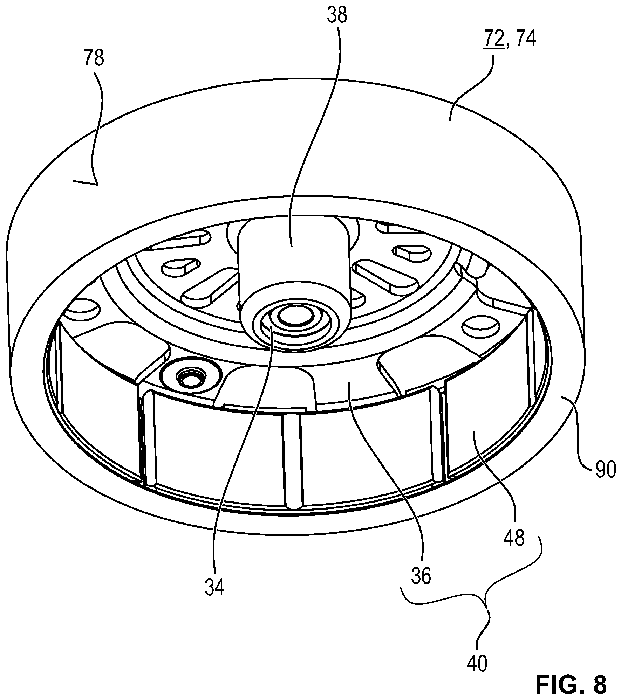

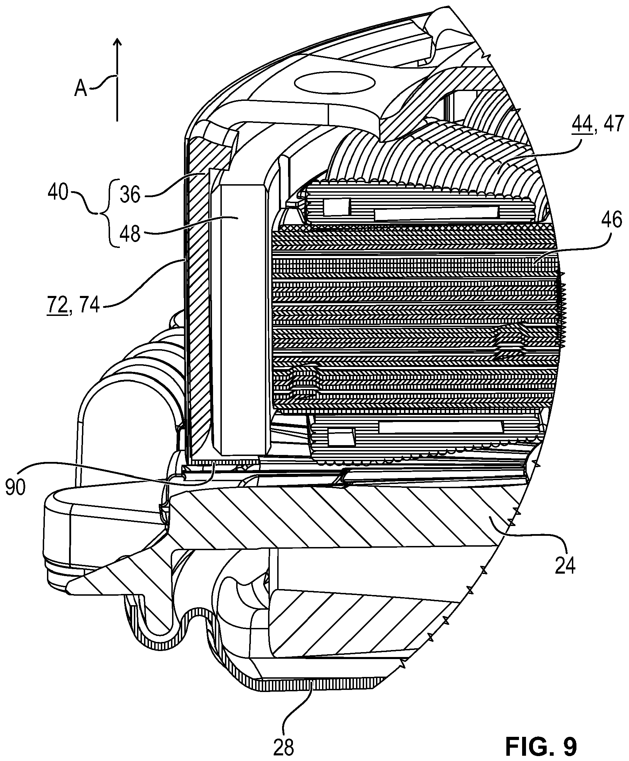

In dem zur Erfindung nicht gehörenden Beispiel der Figuren 8 und 9 ist der Halterand 90 des Mantels 74 an der gegenüberliegenden Stirnseite, das bedeutet zum Motorträger 24 hin, angeformt. Mit anderen Worten wird der Rotor 40 beziehungsweise der Rückschlusstopf 36 elektronikseitig hintergriffen.

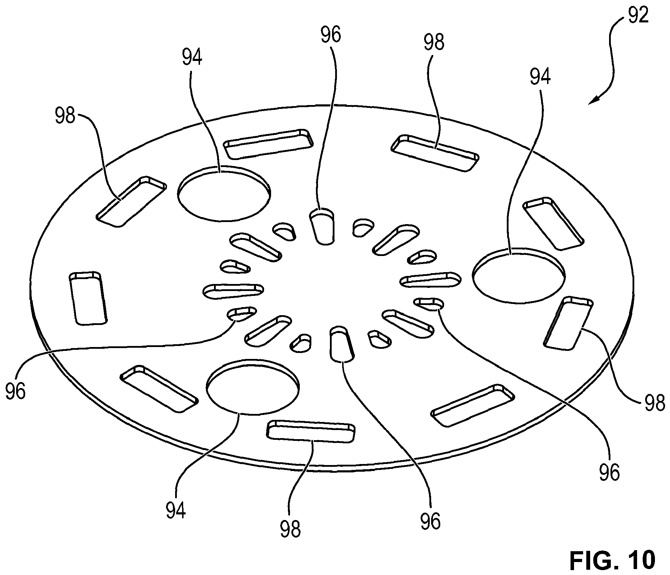

In den Figuren 1 und 10 sowie 11 ist eine Nabenabdeckung als 2. weiteres Abdeckteil 92 gezeigt. Die Nabenabdeckung 92 ist aus einem elektrisch leitfähigen Material gefertigt, und ist im Montagezustand (Fig. 1, Fig. 11) stirnseitig an der Nabe 20 des Lüfterrads 12 montiert beziehungsweise an dieser befestigt.

Die etwa scheibenförmige Nabenabdeckung 92 weist drei entlang der Umfangsoder Azimutalrichtung gleichmäßig verteilte Rundlöcher 94 auf. Im Montage- oder Fügezustand fluchten die Rundlöcher 94 mit entsprechenden Befestigungslöchern der Nabe 20, mittels denen die Nabe 20 drehfest an den Rotor 40 gekoppelt ist. Die Nabenabdeckung 92 weist weiterhin - ähnlich zur Rotorabdeckung 52 - eine Anzahl von lediglich beispielhaft mit Bezugszeichen versehene Lüftungsöffnungen 96 auf, welche im Schreibenzentrum der Nabenabdeckung 92 eingebracht sind. Des Weiteren sind eine Anzahl der Flügel 18 entsprechende Anzahl an etwa rechteckförmigen Aussparungen 98 entlang einer Umfangs- oder Azimutalrichtung in den Bereichen des Außenumfangs in die Nabenabdeckung 92 eingebracht. In den Figuren sind die Aussparungen 98 lediglich beispielhaft mit Bezugszeichen versehen.

Wie insbesondere in der Schnittdarstellung der Fig. 11 ersichtlich ist, ist das Motorgehäuse 54 des Elektromotors 14 im Wesentlichen durch den Motorträger 24 und das Lüfterrad 12 gebildet.

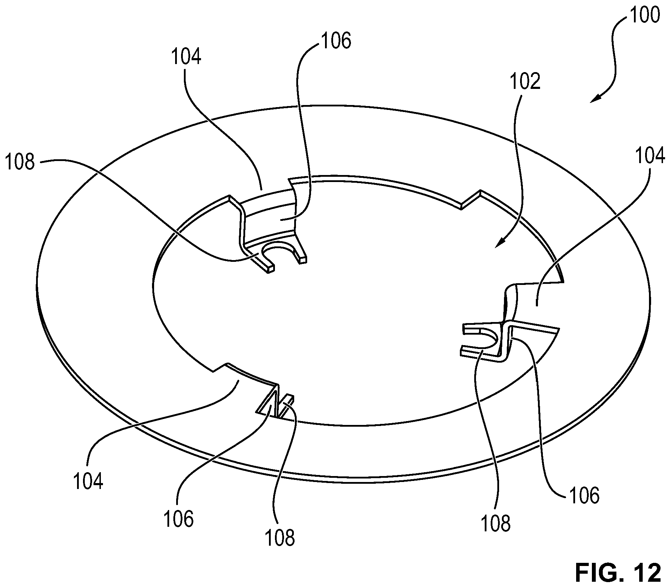

Anhand der Fig. 12 und Fig. 13 ist nachfolgend eine Statorabdeckung als weiteres Abdeckteil 100 näher erläutert. Die Statorabdeckung 100 ist beispielsweise als ein Stanz-Biege-Teil aus einem elektrisch leitfähigen Material zur Verbesserung der EMV des Antriebs 10 ausgeführt.

Die etwa kreisringförmige Statorabdeckung 100 deckt im Montagezustand - wie in Fig. 13 ersichtlich - stirnseitig die Drehfeldwicklung 44 des Stators 42 zumindest teilweise ab. Im Bereich einer zentralen Kreisringöffnung 102 sind drei radial nach innen ragende Winkellaschen 104 angeformt. Die Winkellaschen 104 weisen jeweils eine stufenartige axiale Biegung oder einen Versatz 106 auf. Die Winkellaschen 104 weisen weiterhin an ihren jeweiligen Freienden eine gabelartige Aufnahme 108 auf. Wie in der Fig. 13 ersichtlich, sind die Winkellaschen 104 mittels der Aufnahmen 108 an den motorträgerfesten Befestigungsschrauben 50 des Stators 42 befestigt, sodass die Statorabdeckung 100 mechanisch fest mit dem Stator 42 gekoppelt ist.

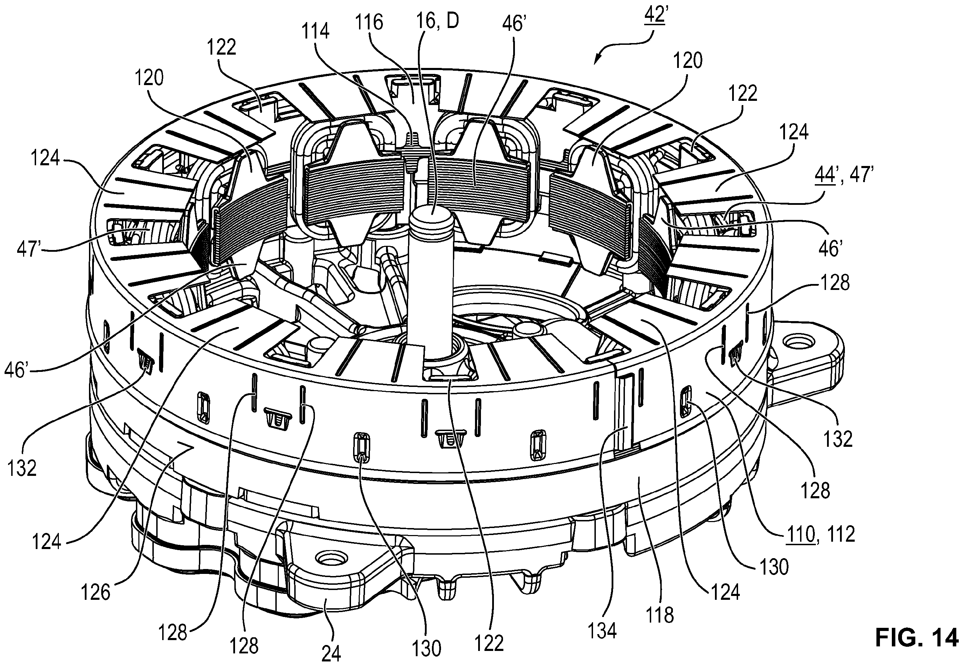

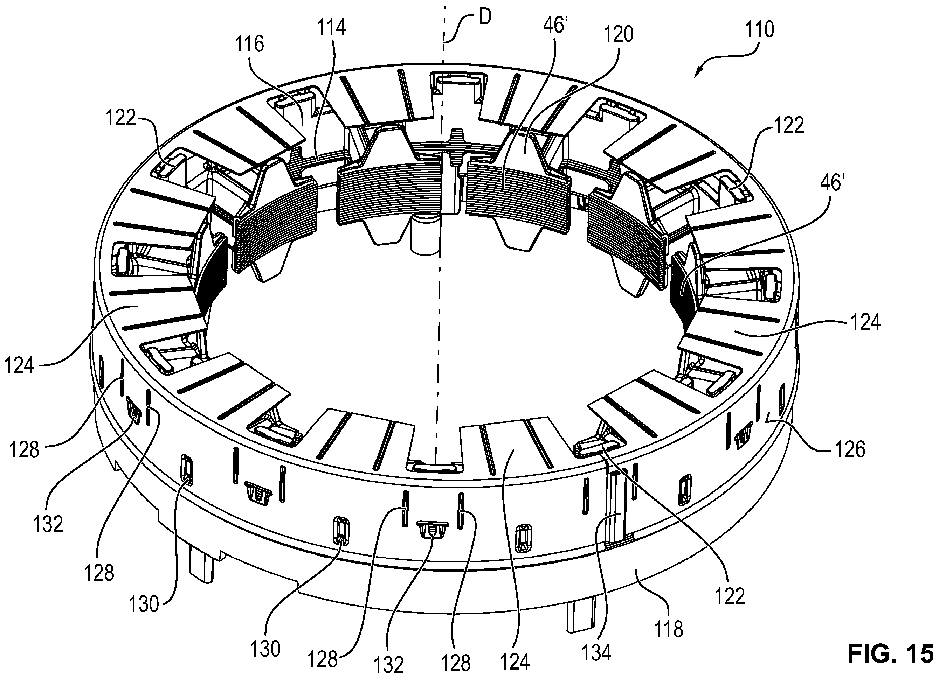

In den Figuren 14 bis 17 ist gemäß einem zur Erfindung nicht gehörenden Beispiel ein manschettenartiges oder manschettenförmiges Abdeckteil 110 für einen als Innenläufer ausgeführten Elektromotor 14 dargestellt. Das nachfolgend auch als Statormanschette bezeichnete Abdeckteil 110 weist einen (Manschetten-, Stator-)Mantel 112 auf, welcher im Montagezustand auf den Außenumfang des Stators 42' aufgesetzt ist.

Der Stator 42' ist im Wesentlichen gebildet durch ein kreisringartiges, insbesondere stanzpaketiertes, (Stator-)Blechpaket 114 mit zwölf sternförmig angeordneten und radial nach innen gerichteten (Stator-)Zähnen 46'. Die Statorzähne 46' sind mit der mehrphasigen Drehfeldwicklung 44' versehen, wobei jede Phase mindestens eine Spule oder Spulenwicklung (Phasenwicklung) 47' umfasst, die ein erstes und ein zweites Spulenende aufweist. Die Spulen 47' sind hierbei insbesondere als Einzelspulen auf jeweils einem Statorzahn 46' angeordnet. Alternativ sind auch Doppel- oder Mehrfachspulen denkbar, deren Spulenwicklung auf zwei oder mehreren Statorzähnen 46' aufgebracht ist.

Zur Verlegung, Kontaktierung und Verschaltung der Spulenenden zur Drehfeldwicklung44' ist beispielsweise eine kreisringförmige Kontakteinrichtung in Form von stirnseitig auf das Blechpaket 114 aufgesetzten Verlege- beziehungsweise Verschaltungsringen 116, 118 vorgesehen.

Die Verschaltungsringe 116, 118 sind paarweise auf die Stirnseiten des Blechpakets 114 aufgesetzt, und weisen jeweils hülsenartige Aufnahmen für die Statorzähne 46' auf, sodass die Statorzähne 46' durch die Aufnahmen der Verschaltungsringe 116, 118 im Wesentlichen von isolierenden Spulen- oder Wickelkörpern umgeben sind. Die Spulenkörper weisen beispielsweise rillenartige Vertiefungen zur Führung der Wickeldrähte und flanschartige Seitenwände 120 zur Vermeidung eines (radialen) Lösens der fertigen Spule 116 vom Statorzahn 46' auf.

Der Verschaltungsring 116 weist eine Terminierung 122 auf, welche als eine segmentierte kreisringartige Wandung über das Blechpaket 114 axial übersteht. Durch die Terminierung 122 können die Wickeldrähte bei einem Wickelvorgang umfangsseitig hinter den Statorzähnen 46' von Statorzahn zu Statorzahn geführt werden, sodass die Wickeldrähte nicht mit dem Wickelwerkzeug kollidieren.

Die Statormanschette 110 ist auf den Verschaltungsring 116 aufgesetzt. Die Statormanschette 110 weist hierbei zwölf Abdecklaschen 124 auf, welche vom Mantel 112 aus radial nach innen gebogen sind. Die Abdecklaschen 124 übergreifen oder verdecken hierbei jeweils eine der Spulen 47', wobei die Terminierung 122 als Verdrehschutz in die Zwischenräume zwischen jeweils zwei benachbarten Abdecklaschen 124 eingreift.

In die dem Stator 42' abgewandten Mantelaußenfläche 126 des Mantels 74 sind vierundzwanzig umfangsseitig verteilte Sicken 128, je zwei pro Abdecklasche 124, eingebracht, welche an der dem Stator 42' zugewandten Mantelinnenfläche radial in die Öffnung der Statormanschette 110 hineinragen. Die Sicke 128 dienen einem Ausgleich des Radialspiels beziehungsweise zum radialen Toleranzausgleich zwischen der Statormanschette 110 und dem Außenumfang des Stator 42'.

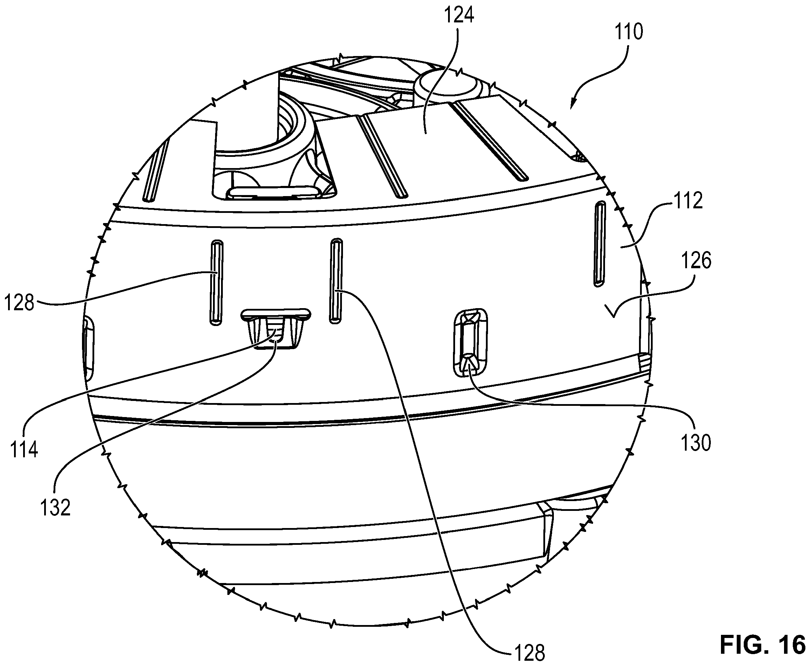

Zwischen den Sicken 128 der jeweiligen Abdecklasche 124 ist ein sickenartiges Kontaktelement 130 in den Mantel 112 angeformt. Im Montagezustand ist das Kontaktelement 130 in einem elektrisch leitfähigen Berührungskontakt mit dem Blechpaket 114 (Fig. 16).

In den Bereichen zwischen den Abdecklaschen 124 ist jeweils ein rastlaschenartiges Fixierelement 132 in den Mantel 112 eingebracht. Die Fixierelemente 132 dienen zur axialen Fixierung beziehungsweise Befestigung der Statormanschette 110 an dem Stator 42'. Hierzu hintergreifen die Fixierelemente 132 im Montagezustand einen dem Blechpaket 114 zumindest teilweise radial überstehenden Rand des Verschaltungsrings 116. Dieser Rand weist hierbei geeigneterweise umfangsseitige Aussparungen für die Kontaktelemente 130 auf.

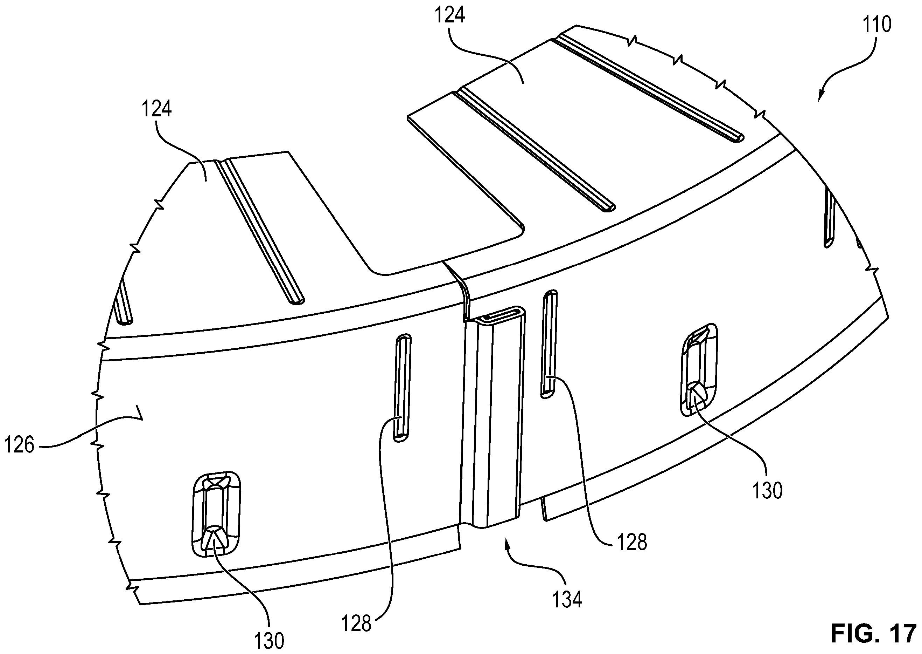

Der Mantel 112 der Statormanschette 110 ist aus einem gerollten oder gebogenen streifenförmigen Blechteil geformt, wobei die gegenüberliegenden Stirnseiten des Blechteils zur Bildung des kreisringförmigen Mantels 112 an einer Fügestelle 134 miteinander gefügt sind. Wie insbesondere in der Fig. 17 deutlich ist, werden die stirnseitigen Endbereiche des Blechteils hierbei zur Bildung der Fügestelle 134 mittels eines Umformprozesses miteinander gefügt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung gemäß dem unabhängigen Anspruch 1 zu verlassen.

So ist es beispielsweise denkbar, lediglich das Abdeckteil 72 zur Verbesserung der EMV des Antriebs 10 zu verwenden. Vorzugsweise werden jedoch mehrere Abdeckteile, insbesondere alle Abdeckteile 72 92 und 100, gemeinsam bei einem mit Außenläufer versehenen Antrieb 10 verwendet.

Im nicht erfindungsgemäßen Beispiel eines Innenläufers ist beispielsweise eine kombinierte Anwendung der Abdeckteile 92 und 110 denkbar. Wesentlich ist, dass mittels eines oder jeder der elektrisch leitfähigen Abdeckteile 52, 72, 92, 100, 110 ein Abfangen, Dämpfen, Umleiten und/oder Schwächen der im elektromotorischen Betrieb auftretenden elektromagnetischen Störfelder des Antriebs 10 bewirkt wird. Dadurch ist ein besonders effektiver Antrieb 10 mit einer besonders geeigneten EMV realisiert.

### Bezugszeichenliste

- 2: Kühlerzarge
- 4: Zargenkörper
- 6: Lüfter/Lüftereinrichtung
- 8: Aussparung
- 10: Antrieb
- 12: Antriebsteil/Lüfterrad
- 14: Elektromotor
- 16: Motorachse
- 18: Lüfterflügel
- 20: Nabe
- 22: Oberseite
- 24: Motorträger
- 26: Motorelektronik
- 28: Elektronikgehäuse
- 30: Wechselrichterschaltung
- 32: Drosselspule
- 34: Wälzlager
- 36: Rückschlusstopf
- 38: Lageraufnahme
- 40: Rotor
- 42, 42': Stator
- 44, 44': Drehfeldwicklung
- 46; 46': Statorzahn
- 47, 47': Spule/Einzelspule
- 48: Permanentmagnet
- 50: Befestigungsschraube
- 52: Rotorabdeckung/Abdeckteil
- 54: Motorgehäuse
- 56: Topfboden
- 58: Topfmantel/Mantel
- 60: Kreisringbereich
- 62: Radialstrebe/Strebe
- 64: Kreisringöffnung
- 66: Lüftungsöffnung
- 68: Lüftungsöffnung
- 70: Befestigungsloch
- 72: Rotormanschette/Abdeckteil
- 74: Mantel/Manschettenmantel
- 76: Nahtstelle
- 78: Mantelaußenfläche
- 80: Mantelinnenfläche
- 84: Kragen
- 86: Haltelaschen
- 88: Befestigungsöffnung
- 90: Halterand
- 92: Nabenabdeckung/Abdeckteil
- 94: Rundloch
- 96: Lüftungsöffnung
- 98: Aussparung
- 100: Statorabdeckung/Abdeckteil
- 102: Kreisringöffnung
- 104: Winkellasche
- 106: Biegung/Versatz
- 108: Aufnahme
- 110: Abdeckteil/Statormanschette
- 112: Mantel
- 114: Blechpaket
- 116, 118: Verschaltungsring
- 120: Seitenwand
- 122: Terminierung
- 124: Abdecklasche
- 126: Mantelaußenfläche
- 128: Sicke
- 130: Kontaktelement
- 132: Fixierelement
- 134: Fügestelle
- A: Axialrichtung
- D: Drehachse

## Patentansprüche

1. Elektromotorischer Antrieb (10) für ein Kraftfahrzeug, mit:
einem Elektromotor (14), aufweisend
einen feststehenden Stator (42);
einen Rotor (40), welcher um eine Drehachse (D) relativ zu dem Stator (42) drehbar ausgebildet und mit einem Antriebsteil drehfest koppelbar ist, wobei der Rotor (40) durch einen Rückschlusstopf (36) mit einem Innenumfang, einem Außenumfang, einer Stirnseite und innenumfangsseitig angeordneten Permanentmagneten (48) gebildet ist; und
ein Motorgehäuse (54), welches den Stator (42) und/oder den Rotor (40) zumindest teilweise in sich aufnimmt; und
einem elektrisch leitfähigen Abdeckteil (72) zur Beeinflussung und/oder Abschirmung von im elektromotorischen Betrieb erzeugten elektromagnetischen Störfeldern,
- wobei das Abdeckteil (72) als eine Rotormanschette ausgeführt ist und einen manschettenartigen Mantel (74) aufweist, welcher im Montagezustand auf dem Außenumfang des Rückschlusstopfes (36) aufgesetzt ist,
- wobei in eine dem Rotor (40) abgewandte Mantelaußenfläche (78) des Mantels (74) eine erste Anzahl von umfangsseitig verteilten Sicken (80) zum Ausgleich eines Radialspiels zwischen dem Abdeckteil (72) und dem Außenumfang des Rückschlusstopfes (36) eingebracht ist, welche an der dem Rotor (40) zugewandten Mantelinnenfläche (82) radial in eine durch die Mantelinnenfläche (82) gebildete Öffnung des Abdeckteils (72) hineinragen, und
- wobei der Mantel (74) an einem oberen, an einem im montierten Zustand des Antriebsteils diesem zugewandten Ende angeordneten Kragen (84) eine zweite Anzahl von umfangsseitig verteilt angeordneten Haltelaschen (86) zur drehfesten Befestigung des Abdeckteils (72) an der Stirnseite des Rückschlusstopfes (36) aufweist, welche radial nach innen gebogen sind.

2. Elektromotorischer Antrieb (10) gemäß Anspruch 1, wobei das Abdeckteil (72) an dem Motorgehäuse (54) angelagert ist.

3. Elektromotorischer Antrieb (10) nach Anspruch 1 oder 2, wobei das Abdeckteil (72) in das Motorgehäuse (54) des Elektromotors (14) eingesetzt ist.

4. Lüftereinrichtung (6) für ein Kraftfahrzeug, aufweisend:
einen elektromotorischen Antrieb (10) gemäß einem der Ansprüche 1 bis 3; und
ein als Lüfterrad (12) ausgebildetes Antriebsteil,
wobei ein weiteres Abdeckteil (92) wenigstens im Wesentlichen scheibenförmig ausgebildet und auf eine Nabe (20) des Lüfterrades (12) aufgesetzt ist.

## Claims

1. Electric motor drive (10) for a motor vehicle, with:
an electric motor (14) having
a stationary stator (42);
a rotor (40), which is designed to be rotatable relative to the stator (42) about an axis of rotation (D) and which can be coupled to a drive part in a non-rotatable manner, wherein the rotor (40) is formed by a recoil pot (36) with an inner circumference, an outer circumference, an end face, and inner circumferentially disposed permanent magnets (48); and
a motor housing (54), which at least partially accommodates the stator (42) and/or the rotor (40); and
an electrically conductive cover part (72) for influencing and/or blocking electromagnetic interference fields generated during electromotive operation,
- wherein the cover part (72) is designed as a rotor sleeve and has a sleeve-like shell (74), which, in the assembled state, is placed on the outer circumference of the rotor (40),
- wherein a first number of circumferentially distributed beads (80) are introduced into a shell outer surface (78) of the shell (74) facing away from the rotor (40) to compensate for a radial clearance between the cover part (72) and the outer circumference of the recoil pot (36), which beads, on the inner surface (82) of the shell facing the rotor (40), project radially into an opening of the cover part (72) formed by the inner surface of the shell (82) facing the rotor (40), and
- wherein the shell (74) has, at an upper collar (84) arranged at an end facing the drive part in the assembled state thereof, a second number of retaining lugs (86) arranged in a circumferentially disturbed manner for non-rotatable attachment of the cover part (72) to the end face of the recoil pot (36), which are bent radially inwards.

2. Electric motor drive (10) according to claim 1, wherein the cover part (72) is mounted on the motor housing (54).

3. Electric motor drive (10) according to claim 1 or 2, wherein the cover part (72) is inserted into the motor housing (54) of the electric motor (14).

4. Fan device (6) for a motor vehicle, having:
an electric motor drive (10) according to one of claims 1 to 3; and
a drive part designed as a fan wheel (12),
wherein a further cover part (92) is of at least substantially disc-shaped design and is placed onto a hub (20) of the fan wheel (12).

## Revendications

1. Entraînement par moteur électrique (10) pour un véhicule automobile, avec :
un moteur électrique (14), comprenant
un stator fixe (42) ;
un rotor (40), qui est réalisé de manière à pouvoir tourner par rapport au stator (42) autour d'un axe de rotation (D) et qui peut être couplé de manière solidaire en rotation avec une partie d'entraînement, dans lequel le rotor (40) est formé par un pot de retour (36) avec une circonférence intérieure, une circonférence extérieure, une face frontale et des aimants permanents (48) disposés sur la circonférence intérieure ; et
un boîtier de moteur (54), qui reçoit au moins partiellement le stator (42) et/ou le rotor (40) à l'intérieur ; et
une pièce de recouvrement (72) électriquement conductrice pour influencer et/ou blinder les champs électromagnétiques d'interférence générés lors du fonctionnement du moteur électrique,
- dans lequel la pièce de recouvrement (72) est réalisée sous la forme d'un manchon de rotor et comprend une enveloppe (74) en forme de manchon, qui, à l'état de montage, est posée sur la circonférence extérieure du rotor (40),
- dans lequel un premier nombre de billes (80) réparties sur la circonférence sont insérées dans une surface extérieure d'enveloppe (78) de l'enveloppe (74) opposée au rotor (40) pour compenser un jeu radial entre la pièce de recouvrement (72) et la circonférence extérieure du pot de retour (36), lesquelles billes (80) font saillie radialement sur la surface intérieure (82) de l'enveloppe tournée vers le rotor (40) dans une ouverture de la pièce de recouvrement (72) formée par la surface intérieure (82) de l'enveloppe, et
- dans lequel l'enveloppe (74) comprend, sur un collet supérieur (84) disposé à une extrémité tournée vers l'élément d'entraînement à l'état monté de celui-ci, un deuxième nombre de pattes de retenue (86) disposés de manière répartie sur la circonférence pour la fixation solidaire en rotation de la pièce de recouvrement (72) sur la face frontale du pot de retour (36), qui sont recourbées radialement vers l'intérieur.

2. Entraînement par moteur électrique (10) selon la revendication 1, dans lequel la pièce de recouvrement (72) est montée sur le boîtier de moteur (54).

3. Entraînement par moteur électrique (10) selon la revendication 1 ou 2, dans lequel la pièce de recouvrement (72) est insérée dans le boîtier de moteur (54) du moteur électrique (14).

4. Dispositif de ventilateur (6) pour un véhicule automobile, comprenant :
un entraînement par moteur électrique (10) selon l'une des revendications 1 à 3; et
un élément d'entraînement réalisée sous la forme d'une roue de ventilateur (12),
dans lequel un autre élément de recouvrement (92) est réalisé au moins sensiblement en forme de disque et est posée sur un moyeu (20) de la roue de ventilateur (12).
